# EUROPÄISCHE PATENTSCHRIFT

(11) **EP 2 841 793 B1**
(45) Veröffentlichungstag und Bekanntmachung des Hinweises auf die Patenterteilung: **21.02.2018**
(21) Anmeldenummer: 13719769.5
(22) Anmeldetag: 22.04.2013
(51) Int. Cl.: F16F 9/36, E05F 5/10

(54) **DÄMPFER**
DAMPER
DISPOSITIF D'AMORTISSEMENT

(30) Priorität: 25.04.2012 DE 102012103619
(43) Veröffentlichungstag der Anmeldung: 04.03.2015
(73) Patentinhaber: Druck- und Spritzgußwerk Hettich GmbH & Co. KG, 35066 Frankenberg (DE)
(72) Erfinder: WEBER, Konrad, 35085 Ebsdorfergrund (DE)
(74) Vertreter: Dantz, Jan Henning
(86) Internationale Anmeldenummer: PCT/EP2013/058250
(87) Internationale Veröffentlichungsnummer: WO 2013/160223

(56) Entgegenhaltungen:
- EP-A2- 0 264 682
- WO-A1-2004/061327
- WO-A2-02/066857
- DE-A1- 4 236 150
- DE-C1- 19 734 375
- JP-U- S4 816 295

## Beschreibung

Die vorliegende Erfindung betrifft einen Dämpfer, insbesondere für bewegbare Möbelteile, nach dem Oberbegriff des Anspruches 1.

Die WO 2010/124945 A1 offenbart einen Dämpfer für bewegbare Möbelteile, bei dem ein Kolben in einem zylinderförmigen Gehäuse verschiebbar geführt ist. An einer ringförmigen Nut des Kolbens ist ein Dichtring eingefügt, der geschlitzt ausgebildet ist und zur Montage aufgebogen und über den Kolben geschoben wird. Die Kolbenringe werden dabei verformt und auf einen Halter aufgeschoben, um dann in die Nut an dem Kolben eingefügt zu werden. Dabei kann es passieren, dass der Dichtring nicht im elastischen Bereich aufgebogen wird, sondern verformt wird und sich in der Nut nicht vollständig schließt. Gerade wenn die Dichtringe aus härteren Materialien bestehen und auch Eigenspannungen vorhanden sind, beispielsweise durch spanabhebende Bearbeitung der Oberflächen, kann der Außendurchmesser der Dichtringe nach dem Einfügen in die Nut erheblich variieren.

Es ist daher Aufgabe der vorliegenden Erfindung, einen Dämpfer zu schaffen, der eine einfache Montage der Dichtringe ermöglicht und Abweichungen im Außendurchmesser vermeidet.

Diese Aufgabe wird mit einem Dämpfer mit den Merkmalen des Anspruches 1 gelöst.

Erfindungsgemäß weist der Kolben des Dämpfers einen Endabschnitt mit einer im Querschnitt von der Kreisform abweichenden Kontur auf, wobei der ungeschlitzte Kolbenring in einer elastisch verformten Position über den Endabschnitt schiebbar ist. Durch die Verwendung eines ungeschlitzten Kolbenringes wird ein Aufbiegen des Kolbenringes zur Montage vermieden, so dass die erheblichen Unterschiede beim Außendurchmesser des Kolbenringes nach der Montage vermieden werden. Zudem wird die Montage vereinfacht, da der Kolbenring ungeschlitzt ausgebildet wird und nur elastisch verformt über den Endabschnitt des Kolbens geschoben wird, damit er dann an der Nut in axiale Richtung fixiert wird. Dies erleichtert die Montage gerade für eine automatische Serienfertigung.

Erfindungsgemäß ist der Endabschnitt im Querschnitt im Wesentlichen oval ausgebildet. Dabei kann eine Längsseite des Endabschnittes mindestens 10 %, insbesondere mindestens 20 %, länger ausgebildet sein als eine Querseite, so dass nur eine geringfügige Verformung des Kolbenringes bei der Montage vorgenommen werden muss.

Vorzugsweise ist die Nut an dem Kolben ringförmig ausgebildet und der Endabschnitt steht zumindest bereichsweise in radiale Richtung über einen Boden der Nut hervor. In anderen Bereichen kann der Boden der Nut fluchtend mit einer Seitenwand des Endabschnittes ausgebildet sein, so dass sich der Kolbenring auf einfache Weise in axiale Richtung aufschieben lässt. Vorzugsweise steht der Endabschnitt an gegenüberliegenden Längsseiten über den Boden der Nut hervor und sorgt somit für eine axiale Fixierung des Kolbenringes in der montierten Position.

Vorzugsweise ist die Nut breiter ausgeführt als der Kolbenring und der Durchmesser des Nut Bodens ist kleiner als der Innendurchmesser des Kolbenrings. So wird erreicht, dass das Fluid in der einen Bewegungsrichtung durch einen großen Strömungsquerschnitt und somit mit sehr geringen Strömungswiderstand unter dem Kolbenring hindurch auf die Kolbenvorderseite strömen kann, während in der andere Bewegungsrichtung der Kolbenring an der Nutwand flächig anliegt und somit die volle Dämpfwirkung erzielt wird.

Der Kolbenring besteht aus einem härteren Material aus Metall oder Kunststoff. Vorzugsweise wird der Kolbenring aus PTFE (Polytetrafluorethylen) hergestellt. Die Oberfläche des Kolbenringes ist vorzugsweise spanend bearbeitet, damit eine besonders exakte Führung des Kolbenringes innerhalb des Gehäuses gewährleistet ist.

Gemäß einer weiteren Ausgestaltung der Erfindung weist der Kolben mindestens eine Öffnung auf, die bei einer Bewegung des Kolbens mit einem Fluid durchströmt wird. Der Kolben kann dabei an der Stirnseite einen mit der Öffnung verbundenen Strömungskanal aufweisen, der durch eine Platte abgedeckt ist. Dadurch werden die Dämpfungskräfte im Wesentlichen durch das Fluid erzeugt, das durch den Strömungskanal und die Öffnung den Kolben durchströmt. Die Dämpfungskräfte können dabei unterschiedlich groß eingestellt werden, wenn die Platte aus einem elastischen Material hergestellt ist, so dass bei einem Druck zwischen der Platte und dem Strömungskanal die Platte von dem Kolben abgehoben werden kann, wahlweise durch Biegen oder Verschieben, so dass der Querschnitt des Strömungskanals deutlich vergrößert wird. Dies ermöglicht eine leichtgängige Verschiebung, während in die gegenüberliegende Richtung die Platte auf den Strömungskanal gedrückt wird.

Der Kolben ist vorzugsweise einstückig hergestellt, beispielsweise aus Metall oder Kunststoff.

Der erfindungsgemäße Dämpfer wird anhand eines Ausführungsbeispiels mit Bezug auf die beigefügten Zeichnungen näher erläutert. Es zeigen:
- Figur 1: eine perspektivische Schnittdarstellung eines erfindungsgemäßen Dämpfers;
- Figur 2: eine perspektivische Ansicht des Kolbens vor der Montage des Kolbenringes;
- Figuren 3 bis 5: mehrere Ansichten des Kolbens bei der Montage des Kolbenringes;
- Figuren 6 und 7: zwei Ansichten des Kolbens mit montiertem Kolbenring;

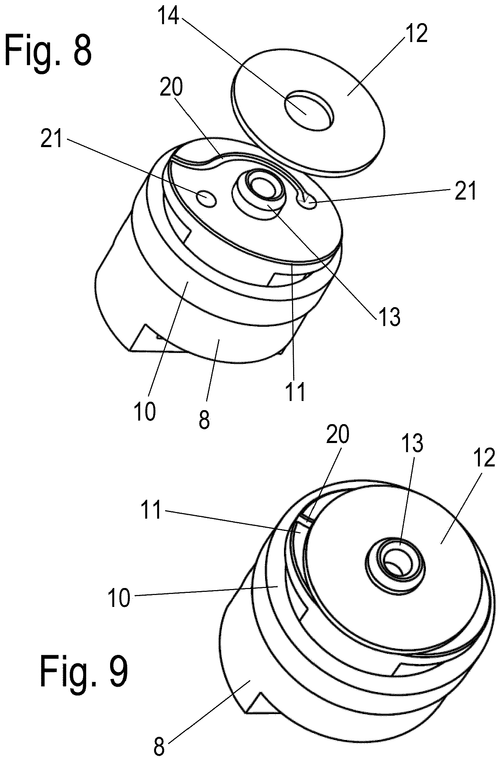

- Figur 8: eine perspektivische Ansicht des Kolbens bei der Montage der Platte, und
- Figur 9: eine perspektivische Ansicht des Kolbens mit montierter Platte.

Ein Dämpfer 1 umfasst ein Gehäuse 2 mit einem im Wesentlichen zylinderförmigen Innenraum 7, in dem ein Kolben 8 verschiebbar geführt ist. Der Kolben 8 ist mit einer Kolbenstange 3 verbunden, die ein Verbindungselement 4 mit einer Durchgangsöffnung 5 aufweist. An der gegenüberliegenden Seite weist das Gehäuse 2 eine Öffnung 6 zur Montage des Dämpfers an bewegbaren Bauteilen, beispielsweise an einem Scharnier, auf. Der Dämpfer 1 wird vorzugsweise zur Dämpfung der Bewegung von bewegbaren Möbelteilen, wie Türen oder Klappen, eingesetzt, kann aber auch für andere Zwecke verwendet werden.

In dem Kolben 8 sind mehrere Durchgangsöffnungen 21 ausgebildet, die mit einem Fluid durchströmt werden, wenn der Koben 8 innerhalb des Gehäuses 2 verschoben wird. An dem Kolben 8 ist eine Nut 9 ausgebildet, in die ein Kolbenring 10 eingefügt ist. Bei einer Bewegung des Kolbens 8 strömt Fluid innerhalb des Gehäuses 2 von einer Seite des Kolbens 8 zur anderen Seite, wobei auf der Seite mit der Kolbenstange 3 ein Ausgleichselement 15 vorgesehen ist, um die Volumenänderung durch Einschieben oder Herausziehen der Kolbenstange 3 aus dem Gehäuse 2 auszugleichen. Das Gehäuse 2 ist auf der Seite zur Kolbenstange 3 endseitig mit einem Verschlusselement 16 abgedichtet, durch das die Kolbenstange 3 herausgeführt ist.

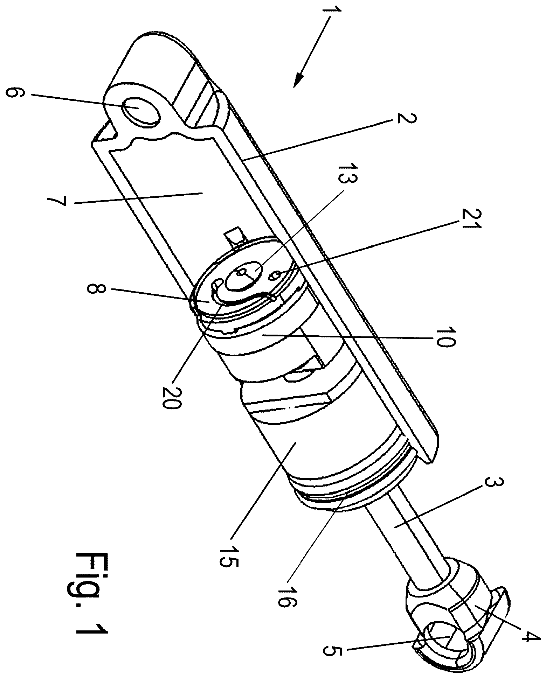

An dem Kolben 8 ist auf der zur Kolbenstange 3 abgewandten Seite ein Befestigungsmittel 13 vorgesehen, mittels dem eine in Figur 1 nicht dargestellte Platte 12 an der Stirnseite des Kolbens 8 fixiert wird, um die Dämpfungskraft des Dämpfers 1 bei Bewegung des Kolbens 8 in unterschiedliche Richtungen unterschiedlich auszugestalten.

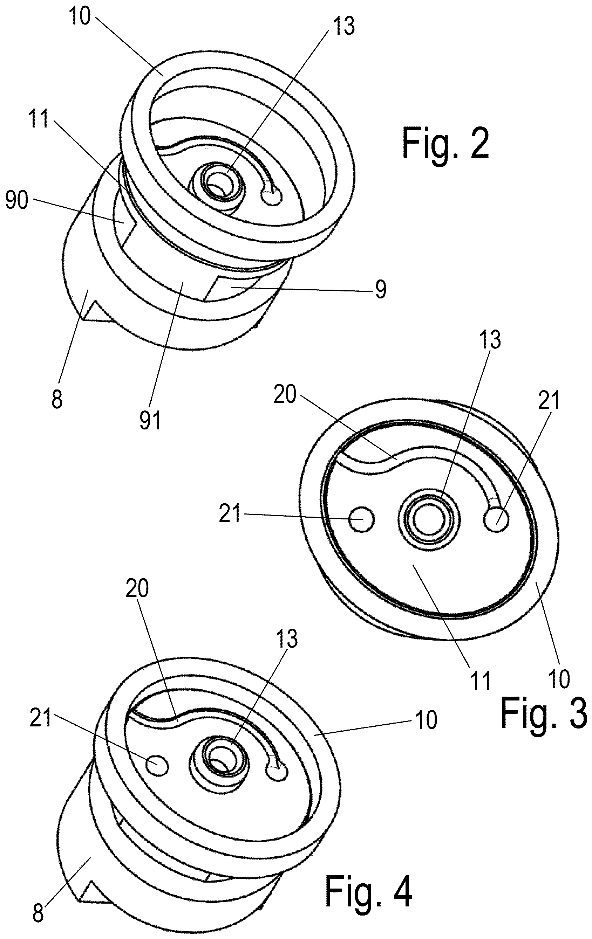

In Figur 2 ist der Kolben 8 vor der Montage des Kolbenringes 10 gezeigt. Der Kolben 8 weist eine Nut 9 auf, die von einem Endabschnitt 11 an einer Seite begrenzt ist. Der Endabschnitt 11 ist im Querschnitt oval ausgebildet und besitzt eine Längsseite, die länger ist als eine Querseite, beispielsweise in einem Bereich zwischen 10 % und 25 %. Durch die ovale Ausbildung des Endabschnittes 11, der im Wesentlichen plattenförmig ist, besitzt die Nut 9 Bereiche mit einem Nutboden 90, benachbart zu den Längsseiten des Endabschnittes 11, die von dem Endabschnitt 11 in radiale Richtung überdeckt werden. In einem Bereich der Querseite des Endabschnittes 11 bildet ein Nutboden 91 eine ebene Seitenfläche mit dem Endabschnitt 11 aus.

Der Kolbenring 10 besteht aus einem harten, aber elastischen Material, insbesondere aus PFTE, wobei die Oberfläche des Kolbenringes 10 spanend bearbeitet werden kann, um mit hoher Genauigkeit in dem Gehäuse 2 geführt zu sein. Der Kolbenring 10 wird zur Montage an dem Kolben 8 elastisch verformt, wie dies in Figur 3 gezeigt ist. Der Kolbenring 10 wird oval verformt, so dass die Innenseite des Kolbenringes 10 etwa die Kontur des Endabschnittes 11 aufweist. In dieser Position kann der ungeschlitzte Kolbenring 10 auf den Endabschnitt 11 aufgeschoben werden, wie dies in Figur 4 gezeigt ist.

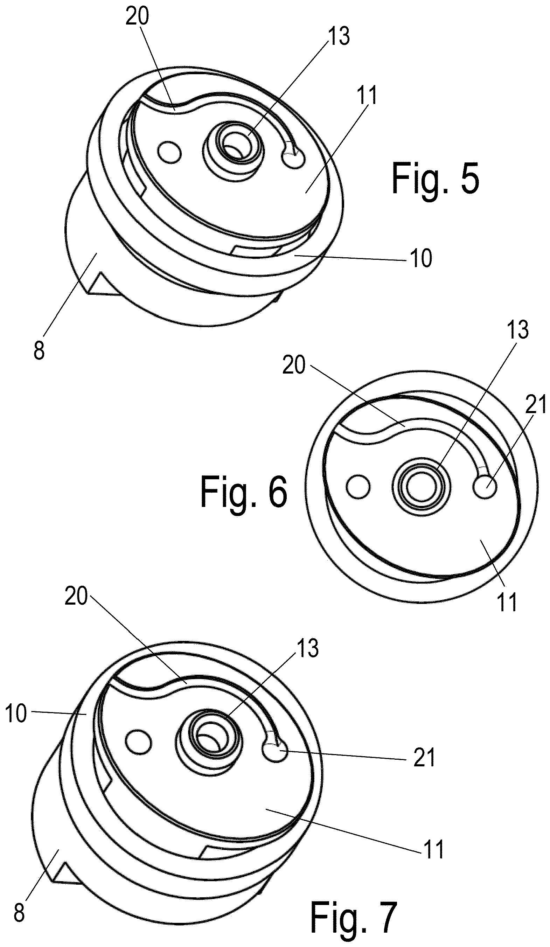

Der Kolbenring wird über den Endabschnitt 11 geschoben, bis die in Figur 5 gezeigte Position erreicht ist. Anschließend wird der Kolbenring 10 losgelassen, so dass er sich von der ovalen Form wieder ringförmig verformt, wie dies in den Figuren 6 und 7 gezeigt ist. Der Kolbenring 10 wird durch den Endabschnitt 11 im Bereich der Längsseiten übergriffen, beispielsweise um 0,5 bis 4 mm, so dass der Kolbenring 10 an gegenüberliegenden Seiten in axiale Richtung gesichert an dem Kolben 8 gehalten ist.

Nach dem Aufschieben des Kolbenringes 10 wird noch eine Platte 12 montiert, die eine mittige Öffnung 14 aufweist und auf das mit der Kolbenstange 3 verbundene Befestigungsmittel 13 montiert werden kann, beispielsweise kann die Platte 12 aufgesteckt und an dem Befestigungsmittel 13 verrastet werden.

An der Stirnseite des Kolbens 8 befindet sich dabei mindestens ein Strömungskanal 20, der in dem gezeigten Ausführungsbeispiel bogenförmig um das Befestigungsmittel 13 ausgebildet ist und nach der Montage der Platte 12 bei einer Bewegung des Kolbens 8 mit einem Fluid durchströmt wird. Die Platte 12 kann dabei aus einem biegbaren Material ausgebildet sein, so dass bei einer Zugbewegung an der Kolbenstange 3 die Platte 12 sich weg von dem Kolben 8 aufbiegen kann, so dass der Strömungskanal 20 zur Platte 12 hin geringfügig geöffnet wird und die Dämpfungskräfte deutlich geringer sind, als wenn die Platte 12 bei einem Einschieben der Kolbenstange 3 in das Gehäuse 2 auf die Stirnseite des Kolbens 8 gedrückt wird und somit der Strömungskanal 20 nur einen geringen Querschnitt besitzt.

Der Dämpfer 2 kann als Fluiddämpfer mit gasförmigen oder flüssigen Medien betrieben werden, beispielsweise mit Silikonöl.

In dem erfindungsgemäßen Ausführungsbeispiel ist lediglich ein Kolbenring 10 an dem Kolben 8 montiert. Es ist natürlich auch möglich, mehrere Kolbenringe 10 in benachbarte Nuten 9 an dem Kolben 8 zu montieren.

### Bezugszeichenliste

- 1: Dämpfer
- 2: Gehäuse
- 3: Kolbenstange
- 4: Verbindungselement
- 5: Durchgangsöffnung
- 6: Öffnung
- 7: Innenraum
- 8: Kolben
- 9: Nut
- 10: Kolbenring
- 11: Endabschnitt
- 12: Platte
- 13: Befestigungsmittel
- 14: Öffnung
- 15: Ausgleichselement
- 16: Verschlusselement
- 20: Strömungskanal
- 21: Durchgangsöffnung
- 90: Nutboden
- 91: Nutboden

## Patentansprüche

1. Dämpfer (1), insbesondere für bewegbare Möbelteile, mit einem Gehäuse (2) mit einem zylinderförmigen Innenraum, in dem ein Kolben (8) verschiebbar geführt ist, wobei der Kolben (8) mindestens eine Nut (9) mit einem Kolbenring (10) aufweist, und der Kolben (8) benachbart zu der Nut (9) einen Endabschnitt (11) ausbildet, wobei der Endabschnitt (11) im Querschnitt eine von der Kreisform abweichende Kontur aufweist, **dadurch gekennzeichnet, dass** der Kolbenring (10) in sich geschlossen ist und in einer elastisch verformten Position über den Endabschnitt (11) schiebbar ist, der Endabschnitt (11) im Querschnitt im Wesentlichen oval ausgebildet ist und der Kolbenring (10) aus Metall oder Kunststoff hergestellt ist.

2. Dämpfer nach Anspruch 1, **dadurch gekennzeichnet, dass** eine Längsseite des Endabschnittes (11) mindestens 10 %, vorzugsweise mindestens 20 %, länger als eine Querseite des Endabschnittes (11) ausgebildet ist.

3. Dämpfer nach Anspruch 1 oder 2, **dadurch gekennzeichnet, dass** der Endabschnitt (11) zumindest bereichsweise in radiale Richtung über einen Boden (90) der Nut (9) hervorsteht.

4. Dämpfer nach einem der vorhergehenden Ansprüche, **dadurch gekennzeichnet, dass** der Kolbenring (10) aus PTFE hergestellt ist.

5. Dämpfer nach einem der vorhergehenden Ansprüche, **dadurch gekennzeichnet, dass** die Oberfläche des Kolbenringes (10) spanend bearbeitet ist.

6. Dämpfer nach einem der vorhergehenden Ansprüche, **dadurch gekennzeichnet, dass** der Kolben (8) mindestens eine Öffnung (21) aufweist, die bei einer Bewegung des Kolbens (8) mit einem Fluid durchströmt wird.

7. Dämpfer nach Anspruch 6, **dadurch gekennzeichnet, dass** der Kolben (8) an einer Stirnseite einen mit der Öffnung (21) verbundenen Strömungskanal (20) aufweist, der durch eine Platte (12) abgedeckt ist.

8. Dämpfer nach einem der vorhergehenden Ansprüche, **dadurch gekennzeichnet, dass** der Kolben (8) einstückig hergestellt ist.

## Claims

1. A damper (1), in particular for movable furniture parts, comprising a housing (2) having a cylindrical interior, in which a piston (8) is displaceably guided, wherein the piston (8) has at least one groove (9) having a piston ring (10) and the piston (8) forms an end section (11) adjacent to the groove (9), wherein the end section (11) has a contour deviating from the circular shape in cross section,
**characterized in that** the piston ring (10) is closed per se and can be pushed in an elastically deformed position over the end section (11),
the end section (11) is formed essentially oval in cross section and the piston ring (10) is produced from metal or plastic.

2. The damper according to Claim 1, **characterized in that** a longitudinal side of the end section (11) is formed at least 10%, preferably at least 20%, longer than a transverse side of the end section (11).

3. The damper according to Claim 1 or 2, **characterized in that** the end section (11) protrudes at least regionally in the radial direction above a bottom (90) of the groove (9).

4. The damper according to any one of the preceding claims, **characterized in that** the piston ring (10) is produced from PTFE.

5. The damper according to any one of the preceding claims, **characterized in that** the surface of the piston ring (10) is machined by cutting.

6. The damper according to any one of the preceding claims, **characterized in that** the piston (8) has at least one opening (21), through which fluid flows during a movement of the piston (8).

7. The damper according to Claim 6, **characterized in that** the piston (8) has a flow channel (20), which is covered by a plate (12) and is connected to the opening (21) on one end face.

8. The damper according to any one of the preceding claims, **characterized in that** the piston (8) is produced in one piece.

## Revendications

1. Amortisseur (1), en particulier pour des parties de meubles mobiles, avec un boîtier (2) possédant un espace intérieur cylindrique dans lequel un piston (8) est guidé avec possibilité de translation, le piston (8) présentant au moins une gorge (9) avec un segment de piston (10) et le piston (8) formant au voisinage de la gorge (9) une section d'extrémité (11), laquelle section d'extrémité (11) présente en section un contour non circulaire, **caractérisé en ce que** le segment de piston (10) est fermé sur lui-même et peut être déplacé dans une position déformée de façon élastique par-dessus la section d'extrémité (11), la section d'extrémité (11) a une forme en section sensiblement ovale et le segment de piston (10) et fait de métal ou de matière plastique.

2. Amortisseur selon la revendication 1, **caractérisé en ce qu'**un côté longitudinal de la section d'extrémité (11) est plus long d'au moins 10 %, de préférence d'au moins 20 % qu'un côté transversal de la section d'extrémité (11).

3. Amortisseur selon la revendication 1 ou 2, **caractérisé en ce que** la section d'extrémité (11) dépasse au moins par zones dans le sens radial au-delà d'un fond (90) de la gorge (9).

4. Amortisseur selon l'une des revendications précédentes, **caractérisé en ce que** le segment de piston (10) est fait de PTFE.

5. Amortisseur selon l'une des revendications précédentes, **caractérisé en ce que** la surface du segment de piston (10) est usinée par enlèvement de matière.

6. Amortisseur selon l'une des revendications précédentes, **caractérisé en ce que** le piston (8) présente au moins une ouverture (21) qui est parcourue par un fluide lors d'un déplacement du piston (8).

7. Amortisseur selon la revendication 6, **caractérisé en ce que** le piston (8) présente sur une face frontale un canal de circulation (20) communiquant avec une ouverture (21), qui est couvert par une plaque (12).

8. Amortisseur selon l'une des revendications précédentes, **caractérisé en ce que** le piston (8) est fabriqué d'une seule pièce.
